# FASCICULE DE BREVET EUROPEEN

(11) **EP 1 041 048 B1**
(45) Date de publication et mention de la délivrance du brevet: **11.09.2002**
(21) Numéro de dépôt: 00400643.3
(22) Date de dépôt: 09.03.2000
(51) Int. Cl.: C03B 37/012, C03B 37/014

(54) **Procédé de fabrication d'une preforme pour fibre optique et plus particulierement d'une preforme de fort diametre**
Verfahren zum Herstellen einer Vorform für optische Fasern, insbesondere einer Vorform mit grossem Diameter
Process for the manufacture of a preform for optical fibres, particularly a preform of large diameter

(30) Priorité: 01.04.1999 FR 9904074
(43) Date de publication de la demande: 04.10.2000
(73) Titulaire: ALCATEL, 75008 Paris (FR)
(72) Inventeur: Jolly, Jacques, 95310 Saint Ouen l'Aumone (FR); Campion, Jean-Florent, 78700 Conflans St. Hononrine (FR); Fauche, Rémi, 78260 Acheres (FR)
(74) Mandataire: Laroche, Danièle

(56) Documents cités:
- EP-A- 0 727 392
- EP-A- 0 831 070
- PATENT ABSTRACTS OF JAPAN vol. 13, no. 523, 21 novembre 1989 (1989-11-21) & JP 01 212246 A (FUJIKURA LTD.), 25 août 1989 (1989-08-25)
- PATENT ABSTRACTS OF JAPAN vol. 18, no. 625, 29 novembre 1994 (1994-11-29) & JP 06 239640 A (FUJIKURA LTD.), 30 août 1994 (1994-08-30)
- PATENT ABSTRACTS OF JAPAN vol. 17, no. 674, 10 décembre 1993 (1993-12-10) & JP 05 221660 A (FURUKAWA ELECTRIC CO. LTD.), 31 août 1993 (1993-08-31)
- PATENT ABSTRACTS OF JAPAN vol. 15, no. 297, 29 juillet 9191 (9191-07-29) & JP 03 109231 A (SHIN ETSU CHEM. CO. LTD.), 9 mai 1991 (1991-05-09)
- PATENT ABSTRACTS OF JAPAN vol. 15, no. 256, 28 juin 1991 (1991-06-28) & JP 03 083831 A (FUJIKURA LTD.), 9 avril 1991 (1991-04-09)

## Description

L'invention concerne un procédé de fabrication de préformes pour fibre optique qui est plus particulièrement destiné à la fabrication de préformes de fort diamètre.

Un procédé connu de fabrication, ou de recharge, de préformes destinées à la production de fibres optiques prévoit un dépôt de silice sur une préforme primaire qui est munie d'embouts de support à ses extrémités et qui est portée par des moyens lui permettant de se déplacer selon son axe et de tourner par rapport à une flamme d'une torche plasma inductive, dans laquelle des grains de silice sont injectés et fondus. Ce procédé permet de réaliser une préforme d'épaisseur déterminée, à partir d'une préforme primaire plus mince, par superposition d'une succession de couches de silice concentriquement réalisées. Les longueurs respectives de ces couches vont en décroissant de manière que l'épaisseur de silice déposée, qui recouvre la préforme et ses embouts, se réduise régulièrement vers les extrémités, depuis un tronçon central de longueur et de diamètre déterminés. Une forme conique est donnée à l'une des extrémités de chaque préforme, afin de faciliter les opérations ultérieures de fibrage, à partir de cette extrémité.

Il est connu d'obtenir la conicité, recherchée au niveau d'une extrémité de fibrage de préforme, par un étirage effectué en tirant en sens opposé sur les embouts de la préforme, rechargée en silice, après que celle-ci ait été localement fondue par chauffage à coeur, dans une zone du tronçon central située à proximité de l'extrémité à rendre conique. Cet étirage permet de séparer la préforme d'un de ses deux embouts de support. Le chauffage intense réalisé en vue de l'étirage a pour inconvénient d'entraîner une forte évaporation de silice dont le refroidissement conduit à la formation de suies qui retombent en particulier sur la préforme. Or ces suies affectent la transparence de la préforme et augmentent sa rugosité.

Pour remédier à ces inconvénients, le document EP-A-0831070 de la demanderesse prévoit de réaliser la séparation en deux étapes. Une première étape d'étirage réduit le diamètre de la préforme dans la zone chauffée en vue du sectionnement, jusqu'à un diamètre choisi qui est usuellement proche du diamètre d'un embout de support. Une opération de glaçage est prévue pour éliminer le dépôt parasite qui s'est produit sur les parties froides de la préforme ayant reçues des suies lors du chauffage réalisé pour la première étape d'étirage. Ce glaçage est réalisé par un passage de la préforme dans la flamme de la torche à plasma, sans qu'il y ait apport de matière. Un second étirage termine la séparation dans la zone, de diamètre plus faible, chauffée à coeur à cette fin. Les quantités de silice, évaporée et redéposée, sont réduites du fait des petites dimensions de la zone alors chauffée.

Ce procédé prévoyant deux étapes de séparation convient bien, lorsque les préformes à sectionner ont un diamètre qui n'est pas trop fort, par exemple un diamètre maximal de l'ordre de 80 mm.

Tel n'est pas le cas, lorsque le diamètre de préforme est tel qu'il rend long et difficile le chauffage à coeur et donc l'obtention d'un ramollissement suffisant de la préforme dans la zone de séparation où l'étirage doit être réalisé.

Par ailleurs, le chauffage prolongé d'une préforme de gros diamètre provoque une évaporation importante de silice, à partir de la zone chauffée, et conduit à un redépôt épais, sur les parties froides de la préforme et en particulier sur celle proche de ce qui va constituer le cône. Ce redépôt épais risque de mal se vitrifier, lors de l'opération intermédiaire de glaçage, et de conduire à l'apparition d'une zone peu homogène susceptible de perturber le fibrage.

Pour remédier à ces inconvénients, l'invention propose un procédé de fabrication ou de recharge de préforme pour fibre optique dans une installation dotée de moyens permettant une rotation axiale d'une préforme, horizontalement tenue aux extrémités entre deux points de montage par des embouts de support, et des translations relatives de la préforme, tenue. Des moyens de chauffage de préforme par torche à plasma, radialement disposés par rapport à ladite préforme sont associés à des moyens d'apport de matière, pour permettre une fabrication par passes successives correspondant à des déplacements relatifs préforme/torche, avec ou sans apport de matière, conduisant en conséquence, soit à un dépôt d'une nouvelle couche de matière sur la préforme, soit à un glaçage sur la dernière couche déposée.

Selon une caractéristique de l'invention, le procédé prévoit d'intercaler au moins une réduction unilatérale de longueur de couche, à l'occasion d'une passe et à partir d'une des couches intermédiaires, au cours du dépôt d'une suite de couches concentriques de matière sur la préforme où les longueurs respectives des couches, déterminées par les déplacements relatifs préforme/torche, sont progressivement réduites en longueur du fait d'une diminution progressive de la longueur des déplacements, de manière que l'épaisseur de matière déposée, qui couvre la préforme et partiellement les embouts, se réduise régulièrement vers les extrémités, ladite réduction unilatérale de longueur de couche conduisant à une limitation de l'épaisseur de matière, déposée sur un des embouts et pour une zone de préforme, limitée en longueur, qui jouxte cet embout, au niveau fixé par la couche déposée préalablement à cette réduction unilatérale.

Selon une caractéristique de l'invention, le procédé comporte une opération d'étirage à chaud réalisée, pour assurer une séparation entre une préforme et un des embouts dans ladite zone de préforme, limitée en longueur, qui jouxte cet embout, après réalisation de la suite de couches nécessaire à la formation de la préforme.

Selon une caractéristique d'une variante de l'invention, le procédé comporte une opération d'étirage à chaud réalisée en deux étapes, séparées par une opération de glaçage de la préforme, dans ladite zone de préforme, limitée en longueur, qui jouxte un embout pour assurer une séparation entre la préforme et cet embout, la première étape d'étirage étant associée à un chauffage à coeur entraînant un ramollissement par fusion dans ladite zone de préforme, limitée en longueur, et produisant une réduction de diamètre, la seconde étape également associée à un chauffage à coeur entraînant un ramollissement par fusion et assurant la séparation complète.

L'invention, ses caractéristiques et ses avantages sont précisés dans la description qui suit en liaison avec les figures évoquées ci-dessous.

La figure 1 est une représentation schématique d'une installation connue permettant la mise en oeuvre du procédé selon l'invention pour la production d'une préforme.

La figure 2 est une représentation schématique d'une préforme réalisée selon l'invention.

La figure 3 est une représentation schématique d'une préforme selon l'invention telle qu'obtenue après séparation.

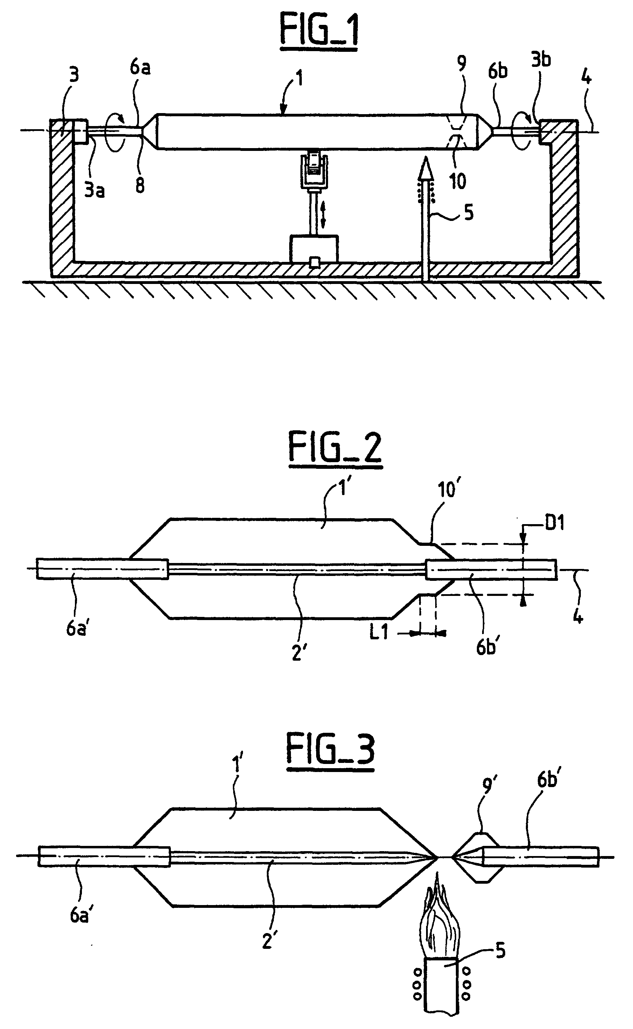

L'installation schématisée en figure 1 est supposée permettre la fabrication, ou recharge, de préformes pour fibre optique, cette opération étant traduite par le terme "overcladding" en langue anglaise. Elle permet l'obtention d'une préforme rechargée 1 à partir d'une préforme primaire 2, d'axe 4, qui est connue de l'art antérieur et qui est schématisée sur la figure 2.

Cette installation comporte des moyens 3, de type tour, permettant d'assurer une rotation axiale de la préforme horizontalement tenue à ses extrémités, par l'intermédiaire d'embouts 6a, 6b, entre deux points de montage 3a, 3b. Comme il est connu, les embouts ont été préalablement fixés aux extrémités de la préforme primaire. L'un d'entre eux, ici référencé 6a, est destiné à rester solidaire de la préforme finalement obtenue, alors que l'autre, soit ici 6b, est destiné à être séparé de cette préforme finale pour permettre l'obtention d'une fibre optique par une opération de fibrage connue de l'homme de métier.

L'installation comporte aussi des moyens de chauffage par torche à plasma 5 qui sont le plus généralement positionnés radialement par rapport à la préforme, lorsque celle-ci est horizontalement tenue entre les points de montage 3a, 3b. Des moyens d'apport de matière, non représentés, sont associés à la torche à plasma, ils sont classiquement utilisés pour injecter des grains de silice dans la flamme de la torche qui en assure la fusion. Le positionnement de la torche est effectué d'une manière connue qui assure un dépôt localisé de silice sur la préforme. Des déplacements relatifs en translation entre préforme et torche permettent d'assurer un dépôt de silice sur une zone de largeur limitée sur la longueur de la préforme et la rotation de celle-ci permet de couvrir par dépôt l'ensemble de la préforme. Il est envisageable que la torche soit déplacée en translation par rapport à la préforme, mais plus classiquement la préforme est montée sur un tour et celui-ci assure les déplacements en translation de la préforme, tenue par ses extrémités, par rapport à la torche alors fixée.

La recharge d'une préforme primaire, telle 2' sur la figure 2, en vue d'obtenir une préforme 1 ou 1' exploitable pour la production d'une fibre, est réalisée par le dépôt, par passes successives, d'une suite de couches concentriques superposées. Il est connu de réduire progressivement la longueur des couches successives en réduisant progressivement la longueur des déplacements relatifs préforme/torche, parallèlement à l'axe 4 de préforme. Ceci permet d'obtenir que l'épaisseur de matière déposée qui couvre la préforme primaire et partiellement les embouts, se réduise progressivement aux deux extrémités et de part et d'autre d'un tronçon central de diamètre uniforme, comme montré sur la figure 1.

Il est nécessaire de séparer l'un des embouts de la préforme finalement obtenue, pour permettre d'obtenir une extrémité à partir de laquelle peut être produite une fibre. Cette opération est réalisée par étirage après un échauffement intensif dans une zone limitée de la préforme où le verre est ramolli par fusion pour faciliter la séparation. Une forte évaporation de silice se produit pendant cette opération et cette silice retombe sous forme de suies qui se solidifient sur les parties les plus froides de la préforme où elles se déposent.

Pour remédier à cet inconvénient, le document EP-A-0831070 prévoit une séparation en deux étapes entre lesquelles on intercale une phase de glaçage. Cette dernière vise à éliminer le redépôt de silice qui est apparu au cours de la première des deux étapes de séparation,. Au cours de cette première étape, la préforme 1, pleinement rechargée, est annulairement réduite en diamètre, jusqu'à une valeur qui correspond par exemple au diamètre d'un embout, dans une zone déterminée 10 où doit être effectuée la séparation. Comme montré sur la figure 1, cette zone 10 est choisie à proximité de l'embout 6b à éliminer et à la suite de la partie 9 de préforme constituée par le dépôt successif des couches de silice sur la préforme primaire et sur l'embout 6b, là où ils se joignent avant séparation.

Le chauffage intensif réalisé à l'aide de la torche à plasma 5, au cours de la seconde étape qui accompagne la séparation réalisée par étirement entre la préforme 1 et l'embout 6b, n'occasionne qu'une évaporation limitée de silice. Cette évaporation et le redépôt qui lui correspond sont donc nettement plus petits que ceux se produisant au cours de l'étape précédente, dans la mesure où le ramollissement à effectuer n'affecte que la zone 10 et ne concerne donc qu'une relativement faible quantité de silice.

Toutefois comme indiqué, cette solution n'est pas toujours pleinement satisfaisante en particulier lorsque le sectionnement est à réaliser sur une préforme de fort diamètre.

Selon l'invention, on s'efforce donc de limiter au maximum la quantité de silice à fondre à coeur et il est donc prévu d'éviter au maximum de déposer des couches concentriques de silice sur la préforme 1 dans les zones à éliminer qui correspondent aux zones 9 et 10, illustrées sur la figure 1.

A cet effet, selon l'invention, il est prévu d'intercaler au moins une réduction unilatérale de longueur de couche de dépôt de matière, à l'occasion d'une passe et à partir d'une des couches intermédiaires, au cours du dépôt de la suite de couches concentriques de matière sur la préforme. La longueur de chaque couche concentrique est fonction de la longueur de déplacement relatif, prévu entre la torche 5 en fonctionnement et la préforme selon l'axe longitudinal 4 de cette préforme, pour la réalisation de cette couche.

Une préforme 1' obtenue par le procédé selon l'invention est réalisée à partir d'une habituelle préforme primaire 2', d'allure cylindrique de révolution, portée à ses extrémités par des embouts 6a' et 6b', comme montré sur la figure 2. Pendant une première partie de la suite des opérations de dépôt de matière, les couches concentriques sont progressivement réduites en longueur de part et d'autre d'un tronçon central, selon une loi de variation qui est par exemple linéaire et qu'impose les déplacements relatifs préforme/torche. Du fait de ces réductions, les extrémités de la préforme en cours de recharge tendent à se constituer en pointes en prenant chacune une allure plus ou moins approximativement conique.

Une réduction unilatérale de longueur de couche est imposée par une réduction du déplacement relatif préforme/torche correspondant. Elle est réalisée à l'occasion d'une passe de recouvrement, par une couche de matière, de la préforme 1' en cours de recharge. Cette réduction est par exemple fixée à une valeur L1 comprise entre 10 et 200 millimètres. Elle est par exemple déclenchée lorsqu'une valeur D1 déterminée de diamètre est atteinte par la préforme en cours de recharge, du fait des dépôts successifs de matière au cours des passes, celles-ci ayant conduit à la formation d'un nombre prédéterminé de couches. Cette valeur de diamètre D1 est choisie supérieure au diamètre de l'embout 6b' et préférablement inférieure à 70 millimètres.

Le dépôt de couches concentriques est alors poursuivi sur la préforme 1' à partir de la couche unilatéralement réduite et avec une loi de variation de longueur décroissante qui est éventuellement la loi de décroissance précédemment exploitée pour les couches dont la superposition a permis d'atteindre l'épaisseur de matière correspondant au diamètre D1. Cette loi de décroissance est par exemple une loi linéaire conduisant à l'obtention d'un tronc de révolution intermédiaire entre le tronçon central cylindrique de la préforme rechargée 1' et le tronçon cylindrique 10' de diamètre D1 qui a été occasionné par la réduction unilatérale de longueur réalisée du côté de l'embout 6b'. Elle se traduit pratiquement par une série de points de contrôle dont les caractéristiques sont fournies à un automate, non représenté, qui est chargé du contrôle des déplacements préforme/torche. La loi de décroissance est supposée la même pour les deux extrémités de la préforme dans l'exemple illustré sur la figure 2.

Une loi différente de décroissance peut également être envisagée, d'une part, pour chaque extrémité de préforme et, d'autre part, pour la partie intermédiaire reliant le tronçon central cylindrique de la préforme au tronçon cylindrique 10'. Ceci a pour objet d'obtenir une extrémité de préforme dont la forme diffère légèrement du cône, après élimination de l'embout 6b', par exemple en se rapprochant de la forme d'un bulbe. Préférablement la loi de variation est choisie pour obtenir un raccordement par inflexion et sans rupture d'un tronc de révolution intermédiaire au tronçon central cylindrique de la préforme.

Une loi de décroissance non linéaire permet par exemple d'obtenir une extrémité pointue, réunie au tronçon central par une jonction courbe d'allure paraboloïdale de révolution qui s'infléchit, sans point de rupture, dans la zone où elle joint latéralement le tronçon central.

Il est aussi possible de réaliser un tronçon cylindrique 10' qui ne corresponde pas à un cylindre de révolution parfait dans la mesure où, par exemple, il est légèrement tronconique.

Quel que soit le cas, il est nécessaire de séparer l'embout 6b' de la préforme 1' obtenue, pour permettre le fibrage. Cette séparation est réalisée dans la zone de préforme, limitée en longueur, qui jouxte cet embout et qui compose le tronçon cylindrique 10' avec lui. En effet, comme il est connu, la zone d'interface, où un embout est uni à une préforme, n'est pas utilisée pour le fibrage, car elle n'est pas suffisamment homogène en raison de la soudure verre-verre par laquelle l'embout et la préforme sont solidarisés.

La séparation est effectuée par étirement du verre constituant le tronçon 10' qui est localement rendu mou par un chauffage à coeur au moyen de la torche à plasma 5, dans la zone de préforme que comporte le tronçon 10' et qui jouxte l'embout. Cet étirement est réalisé en exerçant des tractions axiales de sens inverse par l'intermédiaire des embouts 6a' et 6b'. Il conduit au sectionnement de la liaison qui existait entre la préforme 1' et son embout 6b', comme schématisé sur la figure 3. Ce sectionnement est facilité par la localisation de l'échauffement intensif, créé par le chauffage à coeur pour ramollir le verre par fusion, dans une portion du tronçon 10' et par le fait que ce tronçon est de faible diamètre par rapport au tronçon central de la préforme 1'.

Une forme plus ou moins conique est obtenue en extrémité de préforme, du côté où se produit la rupture vis-à-vis de l'embout 6b' et du résidu de préforme 9' que cet embout continue à supporter après séparation.

Comme indiqué le choix de la forme d'extrémité de préforme la mieux adaptée au fibrage est obtenue en agissant sur les facteurs intervenant lors de la phase de séparation par étirement et en particulier sur la loi de variation de longueur choisie pour les couches concentriques superposées de la jonction entre le tronçon cylindrique central de la préforme 1' rechargée et le tronçon 10'.

Ceci permet d'éviter d'avoir à effectuer la séparation d'une extrémité de préforme ayant un diamètre correspondant à celui du tronçon central de la préforme, lorsque ce diamètre atteint la limite de valeur évoquée plus haut à partir de laquelle les opérations effectuées au moyen d'une torche à plasma deviennent longues et délicates à réaliser. Cette limitation en diamètre présente l'avantage de n'impliquer que des forces de traction limitées pour réaliser l'opération d'étirement.

De plus la durée de l'opération de séparation s'en trouve réduite puisque le diamètre du tronçon 10' est lui-même limité vis-à-vis du diamètre hors tout de la préforme. Ceci a aussi pour conséquence de limiter la quantité de redépôt parasite réalisé lors du chauffage à coeur.

## Revendications

1. Procédé de fabrication, ou de recharge, de préforme pour fibre optique dans une installation dotée de moyens permettant une rotation axiale d'une préforme (1'), horizontalement tenue aux extrémités entre deux points de montage (3a, 3b) par des embouts de support (6a, 6b), et des translations relatives de la préforme, tenue, ladite installation étant aussi dotée de moyens de chauffage (5) de préforme par torche à plasma, radialement disposés par rapport à ladite préforme et auxquels sont associés des moyens d'apport de matière, pour permettre une fabrication par passes successives correspondant à des déplacements relatifs préforme/torche, avec ou sans apport de matière, ces déplacements conduisant en conséquence, soit à un dépôt d'une nouvelle couche de matière sur la préforme, soit à un glaçage sur la dernière couche déposée, ledit procédé étant **caractérisé en ce qu'**il intercale au moins une réduction unilatérale de longueur de couche, à l'occasion d'une passe et à partir d'une des couches intermédiaires, au cours du dépôt d'une suite de couches concentriques de matière sur la préforme où les longueurs respectives des couches, déterminées par les déplacements relatifs préforme/torche, sont progressivement réduites en longueur du fait d'une diminution progressive de la longueur des déplacements, de manière que l'épaisseur de matière déposée, qui couvre la préforme et partiellement les embouts, se réduise régulièrement vers les extrémités, ladite réduction unilatérale de longueur de couche conduisant à une limitation de l'épaisseur de matière, déposée sur un des embouts et pour une zone de préforme, limitée en longueur, qui jouxte longitudinalement cet embout, au niveau fixé par la couche déposée préalablement à cette réduction unilatérale.

2. Procédé, selon la revendication 1, **caractérisé en ce que** la réduction unilatérale est réalisée après dépôt d'un nombre déterminé de couches concentriques conduisant à un diamètre de préforme donné.

3. Procédé, selon la revendication 2, **caractérisé en ce que** le diamètre de préforme donné, au-delà duquel est réalisée une réduction unilatérale de longueur de couche, est supérieur au diamètre de l'embout concerné et inférieur à 70 millimètres.

4. Procédé, selon l'une des revendications 1 à 3, **caractérisé en ce qu'**il prévoit la réduction unilatérale de longueur de couche, comprise entre 10 et 200 millimètres.

5. Procédé, selon l'une des revendications 1 à 4, **caractérisé en ce qu'**il prévoit une réduction des longueurs de couche selon une loi linéaire, au moins au-delà de la couche unilatéralement réduite en longueur qui a été réalisée la première et du côté de la préforme où cette réduction a été ménagée.

6. Procédé, selon l'une des revendications 1 à 4, **caractérisé en ce qu'**il prévoit une réduction des longueurs de couche selon une loi de décroissance non linéaire, au moins au-delà de la couche unilatéralement réduite en longueur qui a été réalisée la première et du côté de la préforme où cette réduction a été ménagée.

7. Procédé, selon l'une des revendications 1 à 6, **caractérisé en ce qu'**il comporte au moins une opération d'étirage à chaud réalisée, pour assurer une séparation entre une préforme et un des embouts dans ladite zone de préforme, limitée en longueur, qui jouxte cet embout, après réalisation de la suite de couches nécessaire à la formation de la préforme.

8. Procédé, selon l'une des revendications 1 à 6, **caractérisé en ce qu'**il comporte une opération d'étirage à chaud réalisée en deux étapes, séparées par une opération de glaçage de la préforme, dans ladite zone de préforme, limitée en longueur, qui jouxte un embout pour assurer une séparation entre la préforme et cet embout, la première étape d'étirage étant associée à un chauffage à coeur entraînant un ramollissement par fusion dans ladite zone de préforme, limitée en longueur, et produisant une réduction de diamètre, la seconde étape également associée à un chauffage à coeur entraînant un ramollissement par fusion et assurant la séparation complète.

## Claims

1. A method of manufacturing or building up, i.e. "overcladding", an optical fiber preform in an installation provided with means enabling a preform (1') held horizontally at its ends between two mounting points (3a, 3b) by supporting end-pieces (6a, 6b) to be rotated axially and to be moved relatively in translation, said installation also being provided with heater means (5) for heating the preform by means of a plasma torch, which heater means are disposed radially relative to said preform and are associated with material supply means, so as to enable the preform to be manufactured in successive passes corresponding to the preform and the torch being displaced relative to each other, with or without material being supplied, these displacements therefore leading either to a new layer of material being deposited on the preform, or to the most recent layer deposited being glazed, said method being **characterized in that** it interposes a one-ended reduction in the length of at least one layer, during a pass and starting from one of the intermediate layers, while a succession of concentric layers of material are being deposited on the preform in a manner such that the respective lengths of the layers, which lengths are determined by the preform/torch relative displacements, are progressively shortened as a result of a progressive reduction in the lengths of the displacements, so that the thickness of deposited material that covers the preform and a portion of each of the end-pieces decreases uniformly towards the ends, said one-ended reduction in layer length leading to a limitation of the thickness of material deposited on one of the end-pieces and on a limited-length preform zone that is longitudinally adjacent to said end-piece, at the level set by the layer deposited immediately prior to said one-ended reduction.

2. A method according to claim 1, **characterized in that** the one-ended reduction is performed after depositing a determined number of concentric layers leading to a given preform diameter.

3. A method according to claim 2, **characterized in that** the given preform diameter, above which a one-ended reduction in layer length is performed is greater than the diameter of the end-piece in question, and less than 70 millimeters.

4. A method according to any one of claims 1 to 3, **characterized in that** provision is made for the one-ended reduction in layer length to lie in the range 10 millimeters to 200 millimeters.

5. A method according to any one of claims 1 to 4, **characterized in that** it provides a reduction in layer length that satisfies a linear relationship, at least beyond the layer whose length is reduced at one end and that is deposited first, and at that end of the preform at which said reduction is provided.

6. A method according to any one of claims 1 to 4, **characterized in that** it provides a reduction in layer length that satisfies a non-linear decreasing relationship, at least beyond the layer whose length is reduced at one end and that is deposited first, and at that end of the preform at which said reduction is provided.

7. A method according to any one of claims 1 to 6, **characterized in that** it includes at least one hot drawing operation performed to separate a preform from one of the end-pieces in said limited-length preform zone which is adjacent to said end-piece, after said succession of layers required for forming the preform has been deposited.

8. A method according to any one of claims 1 to 6, **characterized in that** it includes a hot-drawing operation performed in two steps, separated by a preform glazing operation, in said limited-length preform zone which is adjacent to an end-piece so as to separate the preform and said end-piece, the first drawing step being associated with heating to the core causing softening by melting in said limited-length preform zone, and producing a reduction in diameter, the second step also being associated with heating to the core causing softening by melting and achieving full separation.

## Patentansprüche

1. Verfahren zum-Herstellen oder Nachfüllen einer Vorform-für optische Fasern in einer Einrichtung, welche mit Mitteln versehen ist, die eine axiale Drehung einer Vorform (1'), welche an den Enden zwischen zwei Haltepunkten (3a, 3b) durch Halteansätze (6a, 6b) horizontal gehalten ist, und relative Translationen der gehaltenen Vorform ermöglichen, wobei die Einrichtung auch mit Heizmitteln (5) der Vorform durch einen Plasmabrenner, die radial zur Vorform angeordnet sind, und denen Mitteln zur Materialzufuhr zugeordnet sind, versehen ist, um eine Herstellung durch aufeinanderfolgende Durchgänge, welche relativen Versetzungen Vorform/Brenner entsprechen, mit oder ohne Zufuhr von Material, zu ermöglichen, wobei diese Versetzungen in der Folge entweder zu einem Abscheiden einer neuen Materialschicht auf der Vorform oder zu einem Glätten auf der abgeschiedenen letzten Schicht führen, .wobei das Verfahren **dadurch gekennzeichnet ist, dass** wenigstens eine einseitige Verminderung der Schichtlänge während eines Durchgangs und ausgehend von einer der Zwischenschichten eingeschoben ist, wobei im Verlauf der Abscheidung einer Folge von konzentrischen Materialschichten auf die Vorform, die jeweiligen Schichtlängen, welche durch die relativen Versetzungen Vorform/Brenner bestimmt sind, aufgrund einer fortschreitenden Verminderung der Länge der Versetzungen in der Länge fortschreitend vermindert werden, derart dass die Dicke des abgeschiedenen Materials, welches die Vorform und teilweise die Ansätze überdeckt, in regelmäßiger Weise zu den Enden hin vermindert ist, wobei die einseitige Verminderung der Schichtlänge zu einer Begrenzung der Dicke des Materials führt, welches auf einem der Ansätze und für eine Zone der Vorform abgeschieden ist, welche Zone in der Länge begrenzt ist, und diesem Ansatz auf der Höhe, welche durch die mit einseitiger Verminderung zuvor abgeschiedenen Schicht festgelegt ist, längs angrenzt.

2. Verfahren nach Anspruch 1, **dadurch gekennzeichnet, dass** die einseitige Verminderung nach Abscheiden einer bestimmten Zahl von konzentrischen Schichten, welche zu einem gegebenen Durchmesser der Vorform führen, erfolgt.

3. Verfahren nach Anspruch 2, **dadurch gekennzeichnet, dass** der gegebene Durchmesser der Vorform, jenseits dessen eine einseitige Verminderung der Schichtlänge erfolgt, größer als der Durchmesser des betreffenden Ansatzes und kleiner als 70 Millimeter ist.

4. Verfahren nach einem der Ansprüche 1 bis 3, **dadurch gekennzeichnet, dass** vorgesehen ist, dass die einseitige Verminderung der Schichtlänge zwischen 10 und 200 Millimeter liegt.

5. Verfahren nach einem der Ansprüche 1 bis 4, **dadurch gekennzeichnet, dass** eine Verminderung der Schichtlängen gemäß einer linearen Vorschrift vorgesehen ist, wenigstens jenseits der einseitig in der Länge verminderten Schicht, die als erste hergestellt wurde und auf Seite der Vorform wo diese Verminderung geschaffen wurde.

6. Verfahren nach einem der Ansprüche 1 bis 4, **dadurch gekennzeichnet, dass** eine Verminderung der Schichtlängen gemäß einer nichtlinearen Verminderungsvorschrift vorgesehen ist, wenigstens jenseits der einseitig in der Länge verminderten Schicht, die als erste hergestellt wurde und auf Seite der Vorform wo diese Verminderung geschaffen wurde.

7. Verfahren nach einem der Ansprüche 1 bis 6, **dadurch gekennzeichnet, dass** es wenigstens Warmziehschritt umfasst, um eine Trennung zwischen einer Vorform und einem der Ansätze in der Zone der Vorform, welche in der Länge begrenzt ist und diesem Ansatz angrenzt, nach Herstellung der Folge von Schichten, die zur Bildung der Vorform notwendig sind, zu gewährleisten.

8. Verfahren nach einem der Ansprüche 1 bis 6, **dadurch gekennzeichnet, dass** es einen in zwei Etappen durchgeführten Warmziehschritt, die durch einen Glättschritt der Vorform getrennt sind, in der Zone der Vorform, die in der Länge begrenzt ist und welche einem Ansatz angrenzt umfasst, um eine Trennung zwischen der Vorform und diesem Ansatz zu gewährleisten, wobei die erste Etappe zum Ziehen mit einer Erwärmung des Kerns verbunden ist, die zu einer Schmelzerweichung in der Zone der Vorform führt, die in der Länge begrenzt ist, und eine Durchmesserverminderung erzeugt, und die zwei Etappe gleichermaßen mit einer Erwärmung des Kerns verbunden ist, die zu einem Schmelzerweichen führt und die vollständige Trennung gewährleistet.
